Europäisches Patentamt

European Patent Office

Office européen des brevets

(19)

(11) Numéro de publication: **0 329 263**

**A2**

# (12) DEMANDE DE BREVET EUROPEEN

(21) Numéro de dépôt: 89200879.8

(22) Date de dépôt: 21.12.84

(51) Int. Cl.⁴: **G09F 3/03**

(30) Priorité: 29.12.83 FR 8321021

(43) Date de publication de la demande:
23.08.89 Bulletin 89/34

(60) Numéro de publication de la demande initiale
en application de l'article 76 CBE : 0 147 328

(84) Etats contractants désignés:
BE CH DE FR GB IT LI NL SE

(71) Demandeur: COMMISSARIAT A L'ENERGIE
ATOMIQUE
31/33, rue de la Fédération
F-75015 Paris(FR)

(72) Inventeur: Carratt, Michel p/a Comp.
Lyonnaise
13, rue Camille Pelletan
F-78800 Houilles(FR)
Inventeur: Hakoun, Roland
4, Place Raspail
F-95330 Domont(FR)
Inventeur: Maurel, Jean-Joseph
15, rue Victor Clément
F-92160 Antony(FR)
Inventeur: Pecastaings, Serge
3Bis, Place de la Gare de Lozere
F-91120 Palaiseau(FR)
Inventeur: Repain, Pascal
97, route de Carrières
F-78400 Chatou(FR)

(74) Mandataire: Mongrédien, André et al
c/o BREVATOME 25, rue de Ponthieu
F-75008 Paris(FR)

(54) **Dispositif optique de scellement d'un conteneur et procédé de détection d'une tentative d'effraction à l'aide de ce dispositif.**

(57) Dispositif de scellement d'un conteneur et procédé de détection d'une tentative d'effraction à l'aide de ce dispositif.

De manière connue, on masque une partie des fibres à une extrémité d'un câble à fibres optiques (22) et on observe l'autre extrémité du câble (22) lorsqu'on éclaire la première. Selon l'invention, les deux extrémités du câble (22) sont maintenues dans un corps de scellé (2) tandis que le masquage est obtenu à l'aide d'un faisceau énergétique (56) qui détruit l'extrémité de certaines fibres ; l'observation de la deuxième extrémité du câble (22) se fait soit à l'aide d'un appareil photographique, soit à l'aide d'une caméra de visée (74) permettant de repérer les coordonnées des fibres non éclairées ($A_1$, $B_1$, $C_1$).

Application à la détection d'une tentative d'ouverture d'un conteneur.

# DISPOSITIF OPTIQUE DE SCELLEMENT D'UN CONTENEUR ET PROCEDE DE DETECTION D'UNE TENTATIVE D'EFFRACTION A L'AIDE DE CE DISPOSITIF

La présente invention a pour objet un dispositif de scellement ou de fermeture d'un conteneur ainsi qu'un procédé permettant de déceler une tentative d'effraction ou un vol même si le voleur réussit à remettre en place le dispositif de fermeture.

Dans la suite du présent texte, on utilisera le mot "conteneur" pour désigner non seulement un récipient pouvant contenir par exemple des déchets radioactifs, mais n'importe quel objet fermé destiné à contenir des produits, objets ou documents qui risquent de faire l'objet d'une tentative de vol ou d'ouverture. Le mot "conteneur" peut donc désigner aussi bien un récipient qu'un coffre, un meuble, une armoire ou un objet transportable comme une mallette ou une valise.

Il existe à l'heure actuelle un certain nombre de dispositifs de scellement permettant de détecter une tentative d'ouverture d'un conteneur. La plupart consistent en un câble qui passe à travers la genouillère ou les ouïes de fermeture du conteneur et dont les extrémités sont reliées à un boîtier dans lequel on a coulé une masse de résine qui s'est fissurée au refroidissement. Ces fissures forment un dessin bien déterminé que l'on photographie au départ : si quelqu'un réussit à ouvrir et refermer le boîtier, il risque de déplacer la masse de résine ou de créer de nouvelles fissures et l'on peut observer ce changement grâce à une nouvelle photographie. Cependant, on ne détectera rien si le voleur ne touche pas au boîtier et se contente de couper le câble puis de le reconstituer par épissurage.

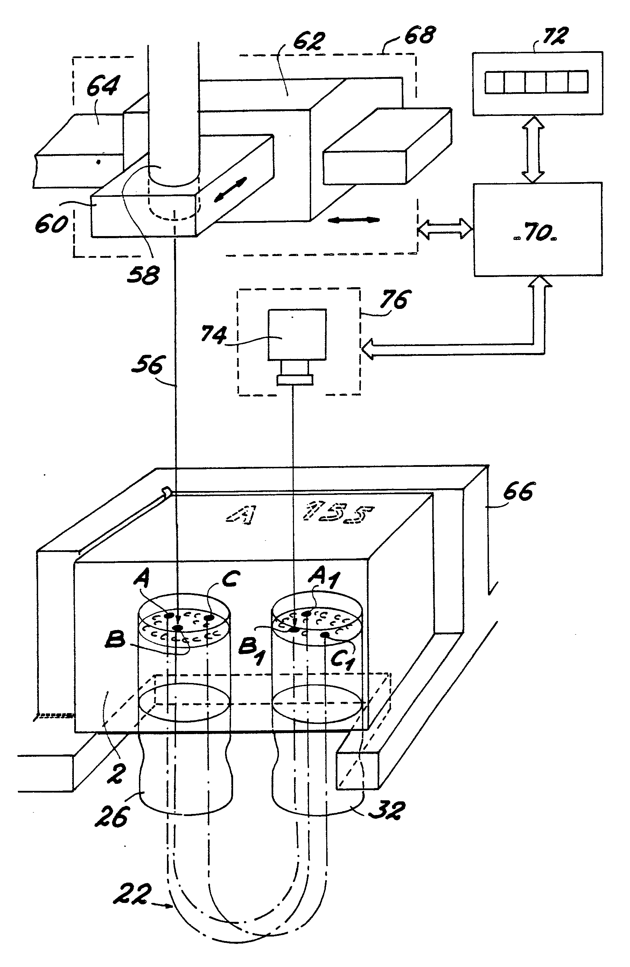

Le brevet américain 4 106 849 décrit un dispositif de scellement à fibres optiques qui comporte un câble à fibres optiques dont les deux extrémités se trouvent à l'intérieur d'un corps de scellé dans lequel les extrémités de fibres s'entrecroisent. On obtient ainsi une figure unique lorsqu'on observe l'une des extrémités du câble avec un microscope. Dans le procédé d'observation et de contrôle, on illumine l'une des extrémités du câble à l'aide d'un projecteur et l'on observe l'autre extrémité à l'aide d'un microscope. Un réticule mobile en rotation et portant une ligne ou une marque opaque permet de masquer un certain nombre de fibres dont les coordonnées sont repérées grâce à un autre réticule monté près de l'occulaire. Si quelqu'un manipule le dispositif de scellement, la disposition relative des fibres change et les coordonnées des fibres masquées par la ligne changent également, ce qui permet de détecter une tentative d'effraction.

Dans ce dispositif, le réticule fait partie d'un appareil externe et peut être mobile en rotation, les coordonnées pouvant être changées. De plus, ce dispositif ne peut pas se distinguer d'autres dispositifs du même type appliqués à des conteneurs entreposés de façon contiguë.

La présente invention a justement pour objet de remédier à cet inconvénient grâce à un dispositif de scellement qui permet de détecter n'importe quelle tentative d'effraction, quel que soit l'endroit où la manipulation a été faite.

Le dispositif objet de l'invention comporte, de manière connue, un câble à fibres optiques passant dans au moins une pièce en forme d'anneau solidaire du conteneur, ce câble ayant une extrémité d'entrée de la lumière et une extrémité de sortie de la lumière, des moyens pour masquer au moins une partie des fibres à l'extrémité d'entrée du câble et des moyens d'observation de l'extrémité de sortie lorsqu'on éclaire l'extrémité d'entrée. Selon l'invention, les deux extrémités du câble sont maintenues dans un corps de scellé dont au moins une partie est transparente à la lumière.

Selon le mode de réalisation, les moyens pour masquer une partie des fibres à l'extrémité d'entrée du câble comprennent :
- un appareil émettant un faisceau énergétique sur l'extrémité d'entrée du câble afin d'occulter l'extrémité de certaines fibres ;
- des moyens de déplacement dudit appareil émetteur afin de diriger le faisceau sur une fibre déterminée ; et
- des moyens pour repérer les coordonnées des fibres dont on a occulté l'extrémité.

Les moyens d'observation de l'extrémité de sortie du câble lorsqu'on éclaire l'extrémité d'entrée comprennent une caméra de visée et des moyens de repérage des coordonnées des fibres non éclairées sur la face de sortie du câble.

Il est avantageux que le corps de scellé comporte deux cavités dans chacune desquelles est logée une extrémité du câble, chaque extrémité du câble étant placée à l'intérieur d'un tube lui-même maintenu dans ladite cavité, ce tube étant serti sur le câble.

L'invention a également pour objet un procédé de scellement d'un conteneur et de détection d'une tentative d'effraction. Selon la principale caractéristique de ce procédé, celui-ci comporte les étapes suivantes :
- on fait passer un câble à fibres optiques dans au moins une pièce en forme d'anneau solidaire du conteneur, ce câble ayant une extrémité d'entrée de la lumière et une extrémité de sortie de la lumière ;
- on place les deux extrémités du câble dans un corps de scellé dont au moins une partie est transparente à la lumière ;
- à l'aide d'un appareil émettant un faisceau énergétique, on occulte l'extrémité de certaines fibres à l'extrémité d'entrée du câble ;
- on envoie un faisceau lumineux à l'extrémité d'entrée du câble et on repère les coordonnées des fibres non éclairées sur la face de sortie ; et
- lors d'un contrôle ultérieur, on éclaire la face d'entrée du câble, on repère les coordonnées des fibres non éclairées à l'extrémité de sortie et on compare avec ce qui a été noté lors de la mise en place du dispositif.

La comparaison des coordonnées des fibres non éclairées lors de la mise en place du dispositif et lors du contrôle ultérieur peut se faire par une méthode statistique. On peut aussi transformer les coordonnées des fibres non éclairées à l'extrémité de sortie du câble en un message codé, le même code étant utilisé pour transformer les coordonnées des fibres non éclairées en un message lors d'un contrôle ultérieur.

On peut également éclairer par la face de sortie et déterminer l'emplacement des fibres masquées sur la face d'entrée. Un codage systématique peut alors permettre de réidentifier un conteneur dont l'identité aurait été perdue pour une raison quelconque si l'emplacement des fibres obturées à l'entrée est toujours le même en fonction du codage mentionné ci-dessus.

L'invention apparaîtra mieux à la lecture de la description qui va suivre, donnée à titre purement illustratif et nullement limitatif, en référence à l'unique figure qui est une vue schématique en perspective illustrant le mode de réalisation du dispositif objet de l'invention.

Si l'on se reporte à cette figure, on voit que le dispositif de l'invention se compose essentiellement d'un corps de scellé 2, réalisé partiellement en un matériau transparent à la lumière, et ayant sensiblement la forme d'un parallélépipède rectangle. Il présente une face d'entrée et de sortie de la lumière 4 destinée à recevoir la lumière émise par une source, et à la renvoyer vers des moyens d'observations. La forme parallélépipédique n'est cependant pas obligatoire, l'essentiel étant d'avoir une face d'entrée et une face de sortie qui soient planes et parallèles entre elles, le reste pouvant éventuellement varier pour la commodité d'emploi.

La face 6 du corps 2 opposée à la face d'entrée et de sortie 4 est percée de cavités cylindriques, d'axes perpendiculaires à la face d'entrée et de sortie 4, dans lesquelles sont introduites une première et une deuxième extrémités d'un câble optique 22 constitué par un certain nombre de fibres 24. Les tubes 26 et 32 sont des inserts de moulage inarrachables qui permettent de maintenir le câble 22 par sertissage, ces tubes étant déformés en créant des marques telles que l'arrachage éventuel du câble détruit le revêtement extérieur de ceux-ci et interdit la remise en place discrète. De plus, si le câble comporte une gaine métallique tressée, les "picots" ou autres reliefs dus à la pince créant des "crevés" dans les tubes 26 ou 32 bloquent le câble optique de façon irréversible. Si des fibres sont endommagées au moment du sertissage, elles sont prises en compte par l'examen fait après mise en place du scellé.

D'autre part, la déformation de la gaine est plus ou moins élastique : après arrachage éventuel, il se produirait un gonflement en retour qui empêcherait la réintroduction.

Le dispositif comprend des moyens pour masquer au moins une partie des fibres optiques 24 à l'extrémité d'entrée du câble 22. Selon l'invention, le masquage est obtenu à l'aide d'un faisceau énergétique, par exemple un faisceau laser 56 sortant d'un guide 58 lui-même relié à un appareil émetteur (non représenté). Le guide 58 est monté sur un support 60 mobile en translation par rapport à un chariot 62 mobile dans une direction perpendiculaire par rapport à un bâti 64. Ceci permet de diriger le faisceau 56 sur une fibre bien déterminée dont on peut repérer les coordonnées, car le corps de scellé 2 est maintenu sur un support 66. L'extrémité de la fibre est occultée et en conséquence ne transmet plus la lumière; on obtient donc un point noir à l'autre extrémité lorsqu'on éclaire la première. Dans l'exemple décrit ici, on occulte les extrémité de trois fibres A, B, C qui correspondent aux points $A_1$, $B_1$, $C_1$ à l'extrémité de sortie du câble. Les éléments 60, 62, 64 sont associés à un système de repérage 68 des déplacements du faisceau laser 56 qui transmet les coordonnées des fibres A, B, C avec prise en compte de la fonction de transfert, à un ordinateur 70 éventuellement associé à un système de codage 72 : ainsi on peut transformer les coordonnées des fibres A, B, C en un message donnant des informations sur le chargement du conteneur, sa destination, etc... La disposition de cette figure peut être utilisée à titre provisoire pour un marquage préalable du scellé, avant montage, pour obturation des fibres en vue du codage, le repérage final de la figure particulière du scellé se faisant après montage définitif, pour tenir compte des fibres éventuellement touchées au moment du scellement.

Au fur et à mesure qu'on fond les extrémités des fibres A, B, C, on éclaire cette partie du câble et on observe l'autre extrémité à l'aide des moyens d'observations. Ces derniers peuvent être constitués d'une caméra 74, ou d'un guide d'images, associée à un système 76 de repérage des coordonnées des points $A_1$, $B_1$, $C_1$. Le système 76 est lui aussi relié à l'ordinateur 70 et à l'appareil de codage 72 afin de transformer en un message les coordonnées des points $A_1$, $B_1$, $C_1$, avec prise en

compte de la fonction de transfert du câble.

Ainsi, lors d'un contrôle ultérieur, par exemple pendant le transport ou lorsque le conteneur est arrivé à destination, on éclaire la première extrémité du câble et on observe l'autre avec une caméra semblable à la camera 74. Les opérations connaissant le code utilisé à la mise en place du dispositif, la détermination des coordonnées des points $A_1$, $B_1$, $C_1$ permet de reconstituer le message. Si on obtient un message différent de celui qui est attendu ou un message incompréhensible, c'est qu'il y a eu manipulation.

Il est clair qu'on peut effectuer un contrôle avec un appareil photographique. On peut aussi utiliser une méthode statistique afin de confirmer dans un premier temps qu'il y a conformité au moins approximative entre l'image observée et l'image initiale, quitte à faire un contrôle plus détaillé ensuite.

Ainsi, le dispositif objet de l'invention est particulièrement intéressant puisqu'il permet, de manière simple, de détecter pratiquement à coup sûr, toute tentative d'ouverture du conteneur et toute manipulation du dispositif de scellement.

De plus, on ne sortirait pas du cadre de l'invention en introduisant certaines variantes. Par exemple, grâce à des guides d'image, celle-ci peut être reportée sur un tableau de contrôle à distance avec éventuellement le branchement d'une télé-alarme qui se déclenche en cas de non-correspondance des images lors d'une vérification, le système permettant un contrôle périodique centralisé quasi continu.

Enfin, on peut prendre certaines précautions afin d'éviter des erreurs d'interprétation lors d'un contrôle. Par exemple, on a intérêt à donner au câble une bonne résistance mécanique afin de ne pas détériorer les fibres en cas de choc ou d'accident : pour cela, on peut placer les fibres à l'intérieur d'une gaine en caoutchouc entourée d'une gaine métallique elle-même entourée d'une gaine extérieure. D'autre part, pour sertir les tubes, on utilisera de préférence une pince à crans multiples qui exerce une pression constante sur le tube quel que soit l'opérateur. On limite ainsi la destruction des fibres situées à la périphérie du câble, ce qui est très gênant car on aurait moins de fibres disponibles pour le codage.

Enfin, il n'est pas obligatoire que les deux extrémités du câble se trouvent au voisinage de la même face du corps de scellé. On peut envisager une autre disposition afin de rendre plus difficile une tentative de sciage du corps de scellé et recouvrir d'un revêtement opaque une partie de la surface extérieure de celui-ci.

On peut encore envisager les cas où les deux extrémités du câble ne sont pas dans le même corps de scellé : cette disposition permet d'utiliser un câble de grande longueur afin de maintenir ensemble un nombre plus ou moins grand de conteneurs.

**Revendications**

1. Dispositif de scellement d'un conteneur, du type comportant un câble à fibres optiques (22) passant dans au moins une pièce en forme d'anneau solidaire du conteneur, ce câble (22) ayant une extrémité d'entrée de la lumière et une extrémité de sortie de la lumière, des moyens (28) pour masquer au moins une partie des fibres à l'extrémité d'entrée du câble (22) et des moyens d'observation de l'extrémité de sortie lorsqu'on éclaire l'extrémité d'entrée, caractérisé en ce que les deux extrémités du câble (22) sont maintenues dans un corps de scellé (2) dont au moins une partie est transparente à la lumière.

2. Dispositif selon la revendication 1, caractérisé en ce que les moyens pour masquer une partie des fibres à l'extrémité d'entrée du câble (22) comprennent :
- un appareil (58) émettant un faisceau énergétique (56) sur l'extrémité d'entrée du câble (22) afin d'occulter l'extrémité de certaines fibres (A, B, C) ;
- des moyens de déplacement (60, 62) dudit appareil émetteur (58) afin de diriger le faisceau (56) sur une fibre déterminée ; et
- des moyens (68) pour repérer les coordonnées des fibres dont on a occulté l'extrémité.

3. Dispositif selon la revendication 2, caractérisé en ce que que les moyens d'observation de l'extrémité de sortie du câble (22) lorsqu'on éclaire l'extrémité d'entrée comprennent une caméra de visée (74) et des moyens (76) de repérage des coordonnées des fibres non éclairées sur la face de sortie du câble (22).

4. Dispositif selon la revendication 1, caractérisé en ce que le corps de scellé (2) comporte deux cavités (20, 30) dans chacune desquelles est logée une extrémité du câble (22), chaque extrémité du câble étant placée à l'intérieur d'un tube (26, 32) lui-même maintenu dans ladite cavité (20, 30), ce tube (26, 32) étant serti sur le câble.

5. Procédé de scellement d'un conteneur, caractérisé en ce qu'il comporte les étapes suivantes :
- on fait passer un câble (22) à fibres optiques dans au moins une pièce en forme d'anneau solidaire du conteneur, ce câble (22) ayant une extrémité d'entrée de la lumière et une extrémité de sortie de la lumière ;
- on place les deux extrémités du câble (22) dans un corps de scellé (2) dont au moins une partie est transparente à la lumière ;
- à l'aide d'un appareil (58) émettant un faisceau énergétique (56), on occulte l'extrémité de certaines fibres à l'extrémité d'entrée du câble (22) ;

- on envoie un faisceau lumineux à l'extrémité d'entrée du câble (22) et on repère les coordonnées des fibres non éclairées sur la face de sortie ; et

- lors d'un contrôle ultérieur, on éclaire la face d'entrée du câble (22), on repère les coordonnées des fibres non éclairées à l'extrémité de sortie et on compare avec ce qui a été noté lors de la mise en place du dispositif.

6. Procédé selon la revendication 5, caractérisé en ce que la comparaison des coordonnées des fibres non éclairées lors de la mise en place du dispositif et lors du contrôle ultérieur se fait par une méthode statistique.

7. Procédé selon la revendication 5, caractérisé en ce que, lors de la mise en place du dispositif, les coordonnées des fibres non éclairées à l'extrémité de sortie du câble (22) sont transformées en un message grâce à un code, le même code étant utilisé pour transformer les coordonnées des fibres non éclairées en un message lors d'un contrôle ultérieur.

8. Procédé selon la revendication 5, caractérisé en ce qu'on envoie un faisceau lumineux à l'extrémité de sortie du câble (22) et qu'on repère les coordonnées des fibres non éclairées sur la face d'entrée, permettant ainsi de réidentifier un conteneur dont le marquage a été perdu.